**Europäisches Patentamt**

**European Patent Office**

**Office européen des brevets**

(19)

(11) Veröffentlichungsnummer : **0 356 425 B1**

(12) # EUROPÄISCHE PATENTSCHRIFT

(45) Veröffentlichungstag der Patentschrift :
**23.09.92 Patentblatt 92/39**

(51) Int. Cl.$^5$ : **F16B 13/14**

(21) Anmeldenummer : **88901541.8**

(22) Anmeldetag : **06.02.88**

(86) Internationale Anmeldenummer :
**PCT/DE88/00057**

(87) Internationale Veröffentlichungsnummer :
**WO 88/07141 22.09.88 Gazette 88/21**

(54) **ANKERSTANGE FÜR EINEN KUNSTHARZKLEBEANKER.**

(30) Priorität : **18.03.87 DE 3708764**

(43) Veröffentlichungstag der Anmeldung :
**07.03.90 Patentblatt 90/10**

(45) Bekanntmachung des Hinweises auf die
Patenterteilung :
**23.09.92 Patentblatt 92/39**

(84) Benannte Vertragsstaaten :
**AT BE CH DE FR GB IT LI NL SE**

(56) Entgegenhaltungen :
**DE-A- 3 014 078**
**DE-A- 3 238 751**
**DE-A- 3 516 866**
**DE-C- 3 320 460**
**FR-A- 1 366 950**
**FR-A- 2 328 130**
**FR-A- 2 398 209**
**US-A- 4 305 687**
**US-A- 4 576 524**

(73) Patentinhaber : **Upat GmbH & Co**
**Freiburger Strasse 9 Postfach 1320**
**W-7830 Emmendingen (DE)**

(72) Erfinder : **RINKLAKE, Manfred**
**Grundackerstrasse 6**
**W-7830 Emmendingen 14 (DE)**
Erfinder : **STEUER, Paul**
**Belchenstrasse 9**
**W07835 Teningen (DE)**
Erfinder : **FRISCHMANN, Albert**
**Hürnheimweg 3**
**W-7832 Kenzingen (DE)**

(74) Vertreter : **Rackette, Karl, Dipl.-Phys. Dr.-Ing**
**Kaiser-Joseph-Strasse 179 Postfach 1310**
**W-7800 Freiburg (DE)**

EP 0 356 425 B1

## Beschreibung

Die Erfindung betrifft eine Ankerstange für einen Kunstharzklebeanker mit einem Schaft, der über mehrere in axialer Reihe angeordnete sich in Richtung auf das Einsteckende erweiternde Konusabschnitte verfügt, deren Mantelflächen als an Kunstharzmörtel nichthaftende reibungsarme Umfangsflächen ausgebildet sind.

Eine solche Ankerstange ist aus der US-A-4 305 687 bekannt und gestattet die Verankerung einer Gewindestange mittels einer Verbundmasse in einem Bohrloch eines Betonteils, nachdem das Bohrloch im Bereich des Bohrlochgrundes konisch aufgeweitet worden ist, da die nichthaftenden reibungsarmen Konusabschnitte ein leichtes Gleiten der Ankerstange bezüglich der Mörtelmasse gestatten. Diese bekannte Ankerstange weist aber den Nachteil auf, daß beim Aushärten des Kunstharzmörtels an den Übergängen von zwei Konusabschnitten scharfe Kanten gebildet werden, die unter Belastung, insbesondere bei Zugbelastung, leicht ausbrechen.

Ausgehend von diesem Stand der Technik liegt der Erfindung die Aufgabe zugrunde eine Ankerstange der eingangs genannten Art so zu verbessern, daß hohe Auszugswerte erreicht werden.

Diese Aufgabe wird erfindungsgemäß dadurch gelöst, daß den Konusabschnitten im Bereich des größten Durchmessers ein zylindrischer Abschnitt zugeordnet ist.

Dadurch, daß jedem Konusabschnitt ein zylindrischer Abschnitt zugeordnet ist, der als Überzugszone beim Ausziehen der Ankerstange wirksam wird, werden in der sägezahnprofilierten Mörtelschale abgeflachte Spitzen bzw. Kanten gebildet, die auch bei hoher Beanspruchung nicht ausbrechen.

Gleichzeitig ergeben sich bei einer solchen Ausbildung der Konusabschnitte hervorragende Verhältnisse zwischen den Zug- und Spreizkräften unter Berücksichtigung der auftretenden Scherkräfte. Das Durchziehen der Mörtelschale wird durch die abgeflachte Kante erschwert, da die Druckfläche zur Umformung des Mörtels wesentlich größer wird und damit die relative Flächenpressung zwischen Mörtel und Bohrlochwandung verkleinert wird.

Zweckmäßige Ausgestaltungen und Weiterbildungen der Erfindung sind in den abhängigen Ansprüchen gekennzeichnet.

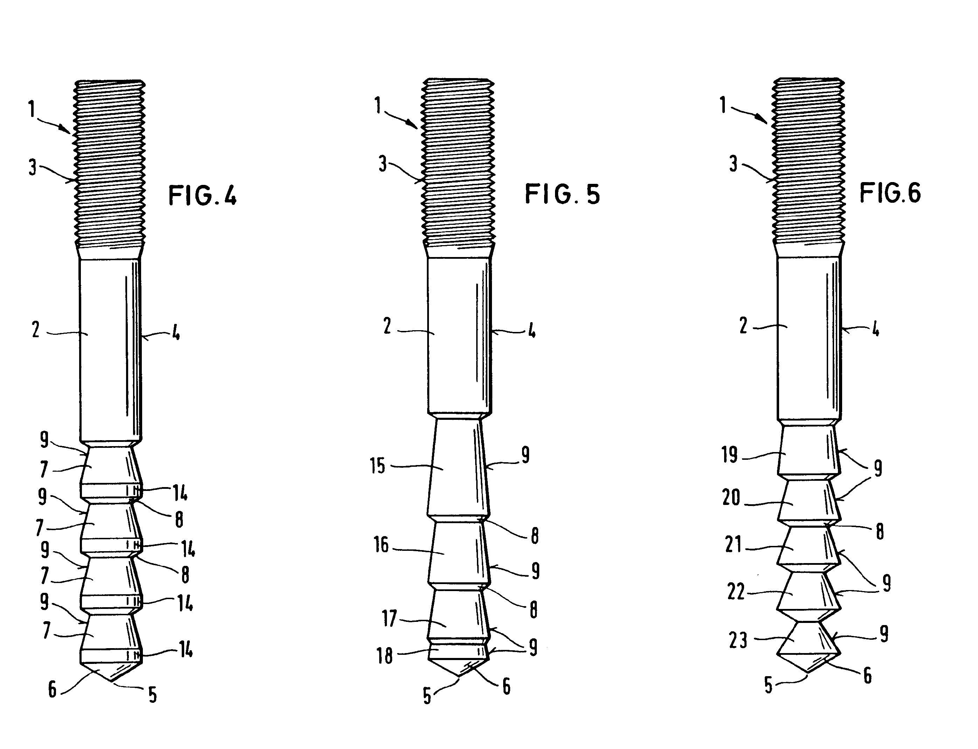

Nachfolgend werden Ausführungsbeispiele der Erfindung anhand der Zeichnung näher erläutert, wobei nur die Fig. 4 erfindungsgemäße zylindrische Abschnitte darstellt. Es zeigen:

Fig. 1 eine Ankerstange gemäß der Erfindung in einer Seitenansicht,

Fig. 2 eine Ankderstange gemäß Fig. 1 nach dem Setzen mit Hilfe eines Kunstharzklebers in einem Bohrloch,

Fig. 3 eine gemäß Fig. 2 gesetzte Ankerstange jeweils in einem Halbschnitt vor und nach dem Auftreten eines Risses im Schnitt,

Fig. 4 ein weiteres Ausführungsbeispiel für eine Ankerstange gemäß der Erfindung,

Fig. 5 eine Ankerstange mit Konusabschnitten unterschiedlicher Länge und Konusneigung in einer Seitenansicht,

Fig. 6 eine Ankerstange mit Konusabschnitten unterschiedlicher Konusneigung und gleicher Länge,

Fig. 7 eine Ankerstange mit einem Endkopfbolzen,

Fig. 8 eine Ankerstange mit einem Endkopfbolzen, der über eine elastische Auflage verfügt und

Fig. 9 eine Ankerstange mit einem über eine Sollbruchstelle angebundenen Mischkopf.

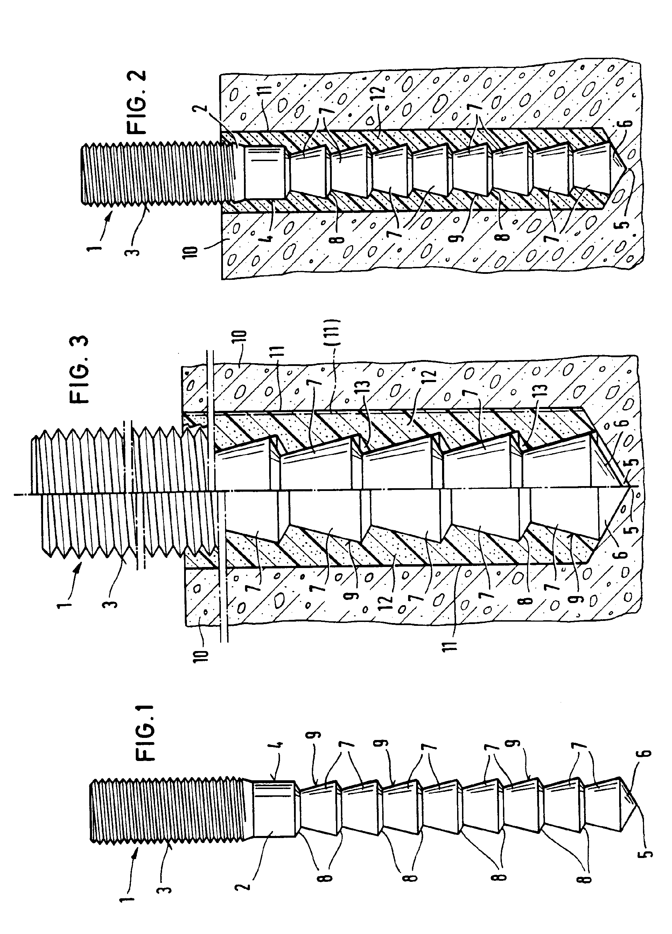

In Figur 1 erkennt man eine Ankerstange 1 für einen Kunstharzklebeanker, deren Schaft 2 an seinem hinteren Ende ein Außengewinde 3 zur Befestigung eines Gegenstandes aufweist. Das Außengewinde 3 läuft in einen glatten zylindrischen Abschnitt 4 aus, dessen Länge eine Anpassung der Tiefe gestattet, in der die auf die Ankerstange 1 einwirkenden Kräfte in den Befestigungsgrund eingeleitet werden.

Zwischen dem glatten Abschnitt 4 und der am vorderen Ende 5 der Ankerstange 1 vorgesehenen Mischspitze 6 befinden sich bei dem in Figur 1 dargestellten Ausführungsbeispiel acht Konusabschnitte 7. Die Konusabschnitte 7 verjüngen sich in Richtung von dem vorderen Ende zum glatten Abschnitt 4 und haben bei dem in Figur 1 dargestellten Ausführungsbeispiel jeweils die gleiche Form mit Ausnahme des vordersten Konusabschnittes 7, der in die Mischspitze 6 übergeht. Die übrigen Konusabschnitte 7 gehen bei dem in Figur 1 dargestellten Ausführungsbeispiel jeweils durch einen steilkonischen Abschnitt 8 in den jeweils benachbarten Konusabschnitt 7 über.

Die in Reihe hintereinander angeordneten Konusabschnitte 7 sind auf ihren Mantelflächen so behandelt, daß nach dem Einsetzen der Ankerstange in einen Kunstharz ein niedriger Reibungsbeiwert gegeben ist. Aus diesem Grunde sind die Konusabschnitte 7 auf ihren Umfangsflächen jeweils mit einer Beschichtung 9 versehen, die z.B. aus einem wachsartigen, synthetischen Polymer, Polytetrafluorethylen, Siliconpolymer oder galvanisch aufgetragenen Überzügen besteht. Es ist auch möglich, statt der Beschichtung eine Ummantelung mit einer Folie, z.B. Polyethylen, Polyvinylchlorid, usw. vorzusehen. Eine andere Möglichkeit, einen niedrigen Reibungsbeiwert zu erzielen, besteht darin, daß eine Ummantelung mit einer tiefgezogenen starren Kunststoffhülle oder eine Ummantelung mit einer tiefgezogenen dünnen Metallhülle vorgenommen wird.

In Figur 2 erkennt man einen Befestigungsgrund 10 aus Beton, in dem ein Bohrloch 11 eingebracht worden ist, in das nach dem Füllen mit einem Kunstharzmörtel die in Figur 1 dargestellte Ankerstange 1 eingesetzt worden ist. Solange der Befestigungsgrund 10 frei von Rissen bleibt, die sich im Bereich des Bohrloches 11 auswirken, bleibt die Lage der Ankerstange 1 dank des Formschlusses zwischen den konischen Abschnitten 7 und dem ausgehärteten Kunstharzmörtel 12 sowie der Verbindung zwischen dem Kunstharzmörtel 12 und dem Befestigungsgrund 10 in der in Figur 2 dargestellten Lage erhalten.

In Figur 3 ist auf der linken Seite im Halbschnitt eine der Figur 2 entsprechende vergrößerte Darstellung gezeigt. Die rechte Hälfte der Figur 3 zeigt die Veränderungen, die sich ergeben, wenn im Beton 10 ein Riß auftritt, der zu einer Erweiterung des Bohrloches 11 führt. Die auf die Ankerstange 1 in Figur 3 einwirkende Zugbelastung führt infolge des niedrigen Reibungsbeiwertes zwischen den beschichteten oder umhüllten Konusabschnitten 7 und der radialen Vergrößerung des beim Aushärten des Kunstharzes 12 geschaffenen kunstharzfreien Innenraumes zu einem axialen Schlupf der Ankerstange 1 in Richtung der Zugkraft. Dabei erfolgt solange ein Schlupf bis die Umfangsflächen der Konusabschnitte 7 wieder gegen die beim Aushärten geformten Innenkonusflächen des Kunstharzmörtels 12 anliegen und dabei infolge des erneuten Formschlusses und des sich bildenden Spreizdruckes trotz des Risses arretiert werden. Die einzelnen Konusabschnitte 7 drücken den gerissenen Pfropfen aus Kunstharzmörtel 12 radial nach außen und gewährleisten somit trotz des Risses eine sichere Befestigung solange die Spaltbreite des Risses nicht in die Nähe der Durchmesserdifferenz der Konusabschnitte an ihren beiden Enden kommt.

Wie man in Figur 3 erkennt, entstehen durch den Schlupf ringförmige Hohlräume 13, deren axiale Länge vom Schlupf abhängt und damit von der Rißbreite.

Durch die oben beschriebene Ausbildung der Ankerstange 1 wird somit erreicht, daß bei einer Belastung der Ankerstange 1 ein Spreizdruck entsteht, der sicherstellt, daß auch bei sich öffnendem Riß der Verbund des Kunstharzmörtels 12 zur Wand des Bohrloches 11 in ausreichendem Maße erhalten bleibt. Nachdem sich ein Riß im Beton 10 gebildet hat, funktioniert somit der oben beschriebene Verbundanker wie ein Spreizanker, d.h. durch die vielen Konusabschnitte 7 wird die Zugkraft entlang der ganzen Länge der Ankerstange 1 zerlegt. Dadurch wird eine Druckverteilung erreicht, die eine gleichmäßige Spreizung bewirkt. Zwischen den Flächen der Kunstharzmörtelschale und den Umfangsflächen der Konusabschnitte 7 sind durch die Beschichtung oder Umhüllung Gleitflächen gebildet, in denen sehr geringe Reibungen auftreten. Dadurch wird nicht nur beim Öffnen eines Risses die in Figur 3 dargestellte Relativbewegung ermöglicht, sondern auch beim Schließen des Risses eine Relativbewegung erreicht, die die Rißbreite ausgleicht.

Wenn ausgehend von der in Figur 3 rechts dargestellten Stellung ein Schließen des Risses erfolgt, wird die von der Mörtelschale übertragene radiale Kraft durch die schräg verlaufenden Umfangsflächen an den Konusabschnitten 7 in eine axiale Kraft in Richtung auf das vordere Ende 5 umgesetzt, wobei infolge der vorgesehenen Gleitflächen ein rückwärtiger Schlupf der Ankerstange 1 bewirkt wird.

Obwohl in den Figuren 1 und 2 acht Konusabschnitte 7 dargestellt sind, genügt es in manchen Fällen, lediglich einen einzigen Konusabschnitt 7 vorzusehen. Für die meisten Anwendungen ist es optimal, wenn drei bis vier Konusabschnitte 7 vorgesehen sind.

Eine Ankerstange 1 mit vier Konusabschnitten 7 ist in Figur 4 dargestellt. Bei dem in Figur 4 dargestellten Ausführungsbeispiel gehen die Konusabschnitte 7 an der zum vorderen Ende 5 weisenden Seite jeweils in einen zylindrischen Abschnitt 14 über. Durch die zylindrischen Abschnitte 14 wird eine gleichmäßige Lastverteilung erreicht und ein Durchziehen der Konusabschnitte bei einer großen Belastung verhindert, weil der im Halbschnitt gezahnte Mörtelpfopfen infolge der zylindrischen Abschnitte breitere und damit stabilere Zähne erhält.

Das in Figur 5 dargestellte Ausführungsbeispiel der Ankerstange 1 verfügt ebenfalls über einen langen glatten zylindrischen Abschnitt 4 wie das in Figur 4 dargestellte Ausführungsbeispiel, jedoch ist die Konusneigung der Konusabschnitte 15, 16, 17, 18 nach vorne zum Einsteckende zunehmend ausgebildet. Der dem glatten zylindrischen Abschnitt 4 benachbarte Konusabschnitt 15 hat beispielsweise einen Konuswinkel von 11 Grad. Der in Richtung auf das Einsteckende folgende Konusabschnitt 16 hat einen Konuswinkel von 14 Grad, der folgende Konusabschnitt 17 einen Konuswinkel von 17 Grad und der letzte Konusabschnitt 18 einen Konuswinkel von 20 Grad. Die geringsten Durchmesser der Konusabschnitte 15, 16, 17 und 18 sind ebenso wie die größten Durchmesser jeweils gleich, weshalb infolge der verschiedenen Konuswinkel zum vorderen Ende hin eine axiale Verkürzung der Konusabschnitte 15 bis 18 vorgesehen ist. Durch die zum vorderen Ende hin steiler werdenden Konusabschnitte 15 bis 18 ergibt sich zum vorderen Ende hin eine zunehmende Zugkraftaufnahme.

Im Gegensatz zum Ausführungsbeispiel nach Fig. 5 ist bei dem in Figur 6 dargestellten Ausführungsbeispiel eine gleiche Länge für fünf verschieden geformte Konusabschnitte 19 bis 23 vorgesehen. Durch die zunehmende Konusneigung in Richtung auf das vordere Ende bei gleicher axialer Konuslänge ergibt sich in der in Figur 6 erkennbaren Weise in Richtung auf das vordere Ende eine zunehmende Hinterschnittiefe, wobei entsprechend dem nach vorne zunehmenden Konuswinkel der kleinere Durchmesser der Konusabschnitte 19 bis 23 in Richtung auf das vordere Ende abnimmt. Der größte Querschnitt in der Ankerstange 1 ist an der Stelle vorhanden, an der die größte Kraft in die Ankerstange 1 eingeleitet wird. Mit zunehmender Verankerungstiefe ändert sich der minimale Querschnitt der Ankerstange und die Hinterschnittiefe nimmt zu. Dadurch ist bei gleichmäßigem Durchmesser des Bohrloches 11 unter Beibehaltung der Tragfähigkeit der Ankerstange 1 eine relativ größere Hinterschnittiefe möglich.

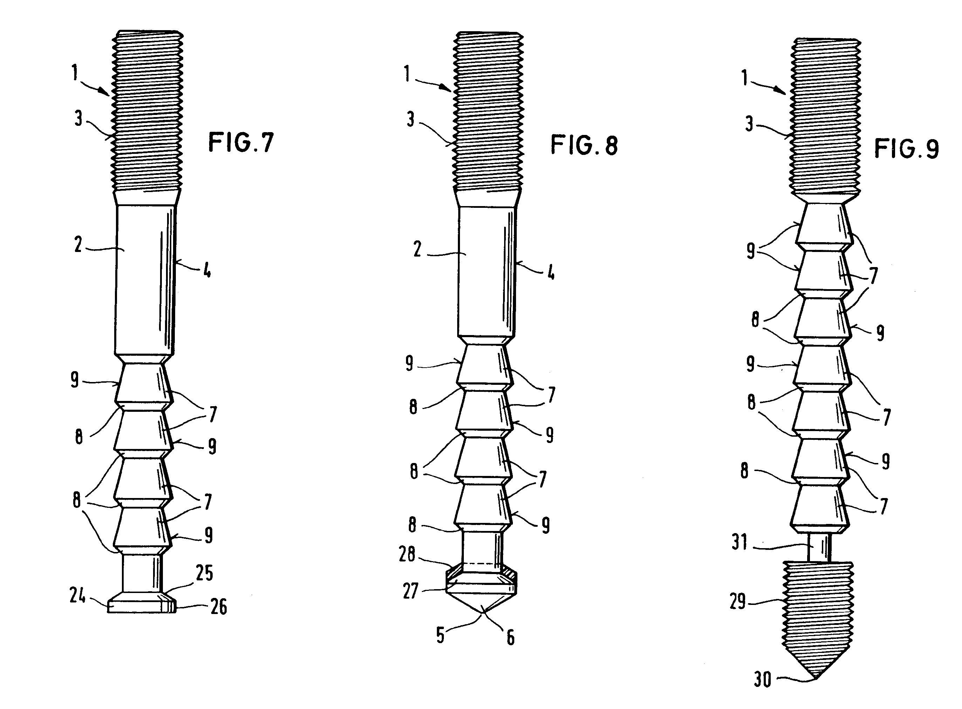

In Figur 7 ist eine Ankerstange 1 mit einem Endkopfbolzen 24 veranschaulicht. Das vordere Ende der Ankerstange 1 ist durch den Endkoptbolzen 24 so ausgeführt, daß die Spreizkraftkomponente sehr klein und die Zugkraftkomponente, die an dem Mörtelpfropfen wirkt, sehr groß ist. Der Endkopfbolzen 24 besitzt einen stark konisch zulaufenden Abschnitt 25 und einen zylindrischen Abschnitt 26.

In Figur 8 ist ein Ausführungsbeispiel dargestellt, das dem in Figur 7 dargestellten ähnlich ist und bei dem am vorderen Ende ein Abschlußkonus 27 vorgesehen ist, der auf seiner Konusumfangsfläche eine elastische Zwischenlage 28 aufweist, die trotz des steilen Winkels einen ausreichenden Schlupf der Ankerstange 1 ermöglicht, der zum Entstehen der Spreizkräfte im Bereich der flachen Konusabschnitte 7 erforderlich ist.

Figur 9 zeigt eine Ankerstange mit einer Vielzahl von Konusabschnitten 7, bei der die Mischspitze 6 gemäß Figur 1 durch einen Mischkopf 29 ersetzt ist, der eine Dachschneide 30 aufweist und bei Verwendung eines nicht vorgemischten Mörtels während des Eindrehens der Ankerstange 1 in das Bohrloch 11 eine Mischung bewirkt. Der Mischkopf 29 ist mit dem vordersten Konusabschnitt 7 über eine Sollbruchstelle 31 verbunden, die einen so geringen Querschnitt aufweist, daß schon bei einer geringen Belastung der Ankerstange 1 ein Abreißen des Mischkopfes 29 erfolgt, um den für ein Nachspreizen bei einem Riß erforderlichen Schlupf zu gestatten. Statt einer Sollbruchstelle kann auch eine Steckverbindung vorgesehen sein.

## Patentansprüche

1. Ankerstange für einen Kunstharzklebeanker mit einem Schaft, der über mehrere in axialer Reihe angeordnete sich in Richtung auf das Einsteckende erweiternde Konusabschnitte (7, 15 bis 23) verfügt, deren Mantelflächen als an Kunstharzmörtel nichthaftende reibungsarme Umfangsflächen (9) ausgebildet sind, **dadurch gekennzeichnet,** daß den Konusabschnitten (7) im Bereich des größten Durchmessers jeweils zylindrischer Abschnitt (14) zugeordnet ist.

2. Ankerstange nach Anspruch 1, **dadurch gekennzeichnet**, daß die Mantelfläche des Konusabschnittes (7, 15 bis 23) eine Beschichtung (9) mit einem Trennmittel, insbesondere ein wachsartiges, synthetisches Polymer, Polytetrafluorethylen, Siliconpolymer oder galvanisch aufgetragene Überzüge aufweist.

3. Ankerstange nach Anspruch 1, **dadurch gekennzeichnet**, daß die Mantelfläche eine Ummantelung mit einer Folie, z.B. aus Polyethylen oder Polyvinylchlorid, aufweist.

4. Ankerstange nach Anspruch 1, **dadurch gekennzeichnet**, daß die Mantelfläche eine Ummantelung mit einer tiefgezogenen starren Kunststoffhülle aufweist.

5. Ankerstange nach Anspruch 1, **dadurch gekennzeichnet**, daß die Mantelfläche eine Ummantelung mit einer tiefgezogenen dünnen Metallhülle aufweist.

6. Ankerstange nach einem der vorstehenden Ansprüche, **dadurch gekennzeichnet**, daß die Konusneigung nach vorne zum Einsteckende zunehmend ausgebildet ist.

7. Ankerstange nach Anspruch 6, **dadurch gekennzeichnet**, daß die axiale Länge der Konusabschnitte (15, 16, 17, 18) zum Einsteckende hin abnimmt und die maximalen sowie minimalen Durchmesser der Konusabschnitte (15, 16, 17, 18) jeweils gleich sind.

8. Ankerstange nach Anspruch 6, **dadurch gekennzeichnet**, daß die axialen Längen der Konusabschnitte (19 bis 23) gleich sind und der geringste Durchmesser der Konusabschnitte ( 19 bis 23) zum Einsteckende hin abnimmt.

9. Ankerstange nach einem der vorstehenden Ansprüche, **dadurch gekennzeichnet**, daß am vorderen Ende ein Endkopfbolzen (24) vorgesehen ist.

10. Ankerstange nach Anspruch 9, **dadurch gekennzeichnet**, daß der Endkopfbolzen (24) auf der vom Einsteckende wegweisenden Seite eine elastische Auflage (28) aufweist.

**11.** Ankerstange nach einem der vorstehenden Ansprüche, **dadurch gekennzeichnet,** daß am Einsteckende eine Sollbruchstelle oder Steckverbindung (31) vorgesehen ist, die die Ankerstange (1) mit einem Mischkopf (29) verbindet, der über eine Dachschneide (30) verfügt.

## Claims

I. An anchor rod for a synthetic resin adhesive anchor having a shaft which has a plurality of cone portions (7, I5 to 23) which are arranged in axial succession and rich increase in size towards the insertion end and the surfaces of rich are in the form of low-friction peripheral surfaces (9) which do not adhere to synthetic resin mortar characterised in that a cylindrical portion (14) is associated with each of the cone portions (7) in the region of the largest diameter.

2. An anchor rod according to claim I characterised in that the surface of the cone portion (7, I5 to 23) has a coating (9) with a parting agent, in particular a wax-like, synthetic polymer, polytetrafluoroethylene, silicone polymer or galvanically applied coats.

3. An anchor rod according to claim I characterised in that the surface has a sheathing with a foil, for example of polyethylene or polyvinyl chloride.

4. An anchor rod according to claim I characterised in that the surface has a sheathing with a deep-drawn rigid plastics sheath.

5. An anchor rod according to claim I characterised in that the surface has a sheathing with a deep-drawn thin metal sheath.

6. An anchor rod according to one of the preceding claims characterised in that the cone inclination is of a configuration such as to increase forwardly towards the insertion end.

7. An anchor rod according to claim 6 characterised in that the axial length of the cone portions (I5, I6, I7, I8) decreases towards the insertion end and the maximum and minimum diameters of the cone portions (I5, I6, I7, I8) are respectively equal.

8. An anchor rod according to claim 6 characterised in that the axial lengths of the cone portions (I9 to 23) are the same and the smallest diameter of the cone portions (I9 to 23) decreases towards the insertion end.

9. An anchor rod according to one of the preceding claims characterised in that an end head pin (24) is provided at the front end.

I0. An anchor rod according to claim 9 characterised in that the end head pin (24) has a resilient support means (28) on the side facing away from the insertion end.

II. An anchor rod according to one of the preceding claims characterised in that provided at the insertion end is a desired-rupture location or a push-in connection (3I) which connects the anchor rod (I) to a mixing head (29) which has a cutting edge (30) of roof-shaped configuration.

## Revendications

1. Barre d'ancrage pour boulons d'ancrage à coller en résine synthétique, dotée d'une tige comportant plusieurs portions coniques (7, 15 à 23) disposées le long de l'axe et s'évasant en direction de l'extrémité à encastrer, dont les surfaces externes se présentent sous forme de surfaces périphériques (9) à faible coefficient de friction et n'adhérant pas au mortier de résine synthétique, caractérisée en ce qu'à chaque portion conique (7) correspond, dans la région de plus grand diamètre, une portion cylindrique (14).

2. Barre d'ancrage selon la revendication 1, caractérisée en ce que la surface externe de la portion conique (7, 15 à 23) présente un revêtement (9) d'agent de séparation, en particulier un polymère synthétique cireux, du polytétrafluoréthylène, un polymère silicone ou des revêtements appliqués par galvanoplastie.

3. Barre d'ancrage selon la revendication 1, caractérisée en ce que la surface externe présente une enveloppe sous forme de feuille, par exemple en polyéthylène ou polychlorure de vinyle.

4. Barre d'ancrage selon la revendication 1, caractérisée en ce que la surface externe présente une enveloppe sous forme de gaine plastique rigide extrudée.

5. Barre d'ancrage selon la revendication 1, caractérisée en ce que la surface externe présente une enveloppe sous forme de mince gaine métallique obtenue par emboutissage profond.

6. Barre d'ancrage selon l'une des revendications précédentes, caractérisée en ce que l'angle de conicité va croissant à mesure que l'on se rapproche de l'extrémité à encastrer.

7. Barre d'ancrage selon la revendication 6, caractérisée en ce que la longueur axiale des portions coniques (15, 16, 17, 18) décroît à mesure que l'on se rapproche de l'extrémité à encastrer et en ce que les diamètres maximaux et les diamètres minimaux sont identiques pour chaque portion conique (15, 16, 17, 18).

8. Barre d'ancrage selon la revendication 6, caractérisée en ce que les longueurs axiales des portions coniques (19 à 23) sont égales et en ce que le plus petit diamètre des portions coniques (19 à 23) diminue en direction de l'extrémité à encastrer.

9. Barre d'ancrage selon l'une des revendications précédentes, caractérisée en ce qu'une tête terminale (24) est prévue à l'extrémité avant.

10. Barre d'ancrage selon la revendication 9, caractérisée en ce que la tête terminale (24) présente un support élastique (28) sur le côté opposé à l'extrémité à encastrer.

11. Barre d'ancrage selon l'une des revendications précédentes, caractérisée en ce qu'il est prévu sur l'extrémité à encastrer une zone de rupture ou un raccord par enfichage (31), qui relie la barre d'ancrage (1) à une tête de mélange (29), dotée d'une arête en forme de toit (30).

FIG.1

FIG. 2

FIG. 3

EP 0 356 425 B1

FIG.4  FIG.5  FIG.6

EP 0 356 425 B1

EP 0 356 425 B1

FIG.9

FIG.8

FIG.7

9